# EUROPEAN PATENT SPECIFICATION

(11) **EP 2 456 721 B1**
(45) Date of publication and mention of the grant of the patent: **04.09.2013**
(21) Application number: 10739295.3
(22) Date of filing: 15.07.2010
(51) Int. Cl.: C02F 1/469

(54) **Process for cleaning a process condensate**
Verfahren zur Reinigung eines Prozesskondensats
Procédé de nettoyage d'un condensé de procédé

(30) Priority: 21.07.2009 EP 09009444
(43) Date of publication of application: 30.05.2012
(73) Proprietor: Linde AG, 80331 München (DE)
(72) Inventor: FARKAS, Lajos, H-3700 Kazincbarcika (HU); SZALONTAI, Lajos, H-3530 Miskolc (HU); BRANDES, Stefan, 83714 Miesbach (DE); OTT, Wolfgang, 81525 München (DE); VIELREICHER, Thomas, 82538 Geretsried (DE)
(86) International application number: PCT/EP2010/004329
(87) International publication number: WO 2011/009565

(56) References cited:
- EP-A- 0 349 164
- WO-A-2008/078602
- US-A1- 2003 059 663

## Description

The invention refers to a process for cleaning a process condensate from a steam reforming process or steam cracking process.

In steam reformation processes, hydrocarbon-containing feedstock such as natural gas, light petroleum or naphtha are mixed with steam and react in steam reformers to synthesis gas, a gas mixture of mainly carbon monoxide (CO) and hydrogen (H₂). From synthesis gas, by purification and fractionation in further process steps, substances such as CO, H₂ or oxo gas (a defined mixture of H₂ and CO) are obtained and given off as products.

That hydrocarbons can react in a high degree of conversion. Therefore the steam reformation process is usually carried out with a steam excess. In order to remove the excess water, the synthesis gas generated in this manner is cooled down to below the dew point of water vapour. Consequently the steam condenses out and what is termed process condensate forms which is predominantly made up of water and is generally loaded with impurities such as methanol, ammonia, carbon dioxide, formic acid and acetic acid.

In steam cracking processes, hydrocarbon-containing feedstock such as long-chain hydrocarbons as naphtha but also butane, propane and ethane or gas oils or hydro waxes are mixed with steam and thermally cracked into short-chain hydrocarbons. The resulting raw gas contains mainly hydrogen (H₂), methane (CH₄), ethylene (C₂H₄) and propylene (C₃H₆). The raw gas is fractioned by a low temperature fractionation process, whereby essentially ethylene and propylene were obtained as valuable products.

The steam cracking process is usually carried out with a steam excess to avoid the agglomeration of the cracked short-chain hydrocarbons. The raw gas is quenched and dried after the steam cracking process. Thereby a process condensate is obtained which is predominantly made up of water and is generally loaded with variety of impurities such as uncracked long-chain hydrocarbons, aromatics or other heavy hydrocarbon containing by-products of the cracking process and some short-chain hydrocarbons.

Within the frame of the present application a condensate predominantly made up of water and originating from a steam reforming process or a steam cracking process is named as process condensate.

According to prior art, the process condensate is mixed with demineralised water which is customarily supplied to the process from the outside. The mixed water thus formed is subsequently degassed and vaporised against mass streams being cooled in the steam reforming or steam cracking process. After the steam is superheated against cooled exhaust gases, a part of the steam (process steam) is used internally in the process, while the remaining part (export steam) is not utilised within the steam reforming or steam cracking process, but in an external process. The generation of export steam makes it possible to utilise heat which cannot be utilised in the steam reformation process or steam cracking process and to increase the economic efficiency of the steam reformation or steam cracking process, but in an external process.

Frequently, the consumer requirements concerning the quality of the export steam are so high that they cannot be met by an export steam generated in the manner described above. For instance, the electrical conductivity of export steam which is to be utilised in a condensation turbine should not exceed 0.3 µS/cm, a value which is frequently exceeded due to the impurities present in the process condensate. In order to maintain the production of export steam, processes exist which provide purification of the process condensate before it is mixed with demineralised water.

For purifying the process condensate, processes are known in which the impurities are separated off by stripping in stripping columns. As stripping gas in such cases of mass streams (for example natural gas) containing air or hydrocarbons are used.

In other processes, the process condensate is expanded, and subsequently degassed in a scrubbing column using low-pressure steam, air or nitrogen. The impurities and stripping agents are discharged to the outside of the plant. In order to meet the high purity requirements of the export steam generated, these processes provide a further purification step by ion exchange in corresponding reactors.

The use of electrodeionisation processes for the treatment of condensates produced in fuel-cells is known from the prior art, for example from the US patent application US 2003/0059663 A1.

An alternative process for the generation of steam in a steam reformation process is disclosed in DE102006019100. According to the process and apparatus disclosed in DE102006019100 two steam streams are generated. The first steam stream (process steam) is preferably completely used in the steam reformation process, while the second steam stream (export steam) can be utilised externally. The exported steam is generated preferably solely by vaporising degassed and demineralised water (high purity water). The disclosed process allows the generation of a very pure and clean export steam and therefore a good use of the energy of the steam reforming process. The necessity of a second steam drum and of a second deaerator for the imported demineralised water for the generation of the second, clean steam stream is a disadvantage of the disclosed process.

The object of the present invention is an alternative process for the cleaning of a process condensate which could be used for the cleaning of a process condensate originating either from a steam reformation process or a steam cracking process.

The object is achieved by feeding said process condensate to an electrodeionisation process, whereby the process condensate is fed to a reverse osmosis process prior to the electrodeionisation process, and wherein clean process condensate obtained in the electrodeionisation process is used as clean steam outside the steam reforming or steam cracking process, preferably in steam networks including co-generation units and steam turbines.

According to the invention a completely different process is used for the cleaning of the process condensate derived from a steam reforming or steam cracking process. An electrodeionisation process is an electrochemical membrane-based process for the purification of water. Thereby ionisable impurities are removed from liquids using electrically active media and an electrical potential to affect ion transport. Due to the electrodeionisation process a purifyed water phase and a liquid phase containing the ionised impurities are generated.

The obtained clean water could be used for the production of clean steam in the known manner. According to the inventive cleaning of the process condensate by using an electordeionisation process a clean steam could be obtained with a conductivity of theoretically 0.06 µS/cm. This is far below the requirements of clean steam for a condensation turbine. According to repeated test measurements using a electrodeionisation process according to the inventive idea a conductivity of below 0.3 µS/cm is achieved. This conductivity is sufficient for the requirements of clean steam.

Therefore the inventive process is an excellent method for the production of clean steam from a process condensate originating from a steam reforming or steam cracking process.

Additionally the costs for the apparatus needed for the inventive process are much lower as compared with the prior art. The costs for a stripping column or for the establishment of a second steam generation cycle are much higher than simple electrodeionisation equipment.

In a preferred embodiment of the invention said process condensate arises in a drying procedure of a process gas resulting from a steam reforming process, in a drying procedure of a process gas resulting from a steam reforming process followed by a water gas shift reaction process or in a drying procedure of a process gas resulting from a steam cracking process. The process gas after the steam reformation furnace is cooled down. Thereby a mixed phase stream is formed. This mixed phase stream is separated in at least one separator into a gaseous phase containing the reaction products of the steam reformation process and an aqueous phase, the process condensate. This process condensate from the bottom of the separators is treated with the electrodeionisation process in this embodiment of the invention. If the steam reformation process is designed to produce as much hydrogen as possible, the process gas from the steam reformation furnace is fed to an intermediate water gas shift reaction process. The carbon monoxide in the process gas reacts with water to carbon dioxide (CO₂) and hydrogen (H₂) in a water gas shift reaction process. The resulting process gas is cooled in the above described manner whereby a similar process condensate except of some differences regarding the methanol and ethanol content is yielded. The resulting process condensate is feed to an electrodeionisation process in this embodiment of the invention.

In the most preferred embodiment of the invention the process condensate is feed to a pre-filter, a heat exchanger, a mechanical cleaning process, a chemical and catalytical pre-treatment prior the electrodeionisation process. According to this embodiment the process condensate is pre-treated upstream the electrodeionisation process. The process condensate is fed to a pre-cleaning process consisting of the individually required pre-cleaning steps. A pre-filter and/or a mechanical cleaning process are useful for the removal of particles, agglomerates or other solids in the process condensate. By a heat exchanger the temperature of the process condensate could be advantageously adjusted to the optimal operation temperature of the electrodeionisation process. In the case of a process condensate resulting from a water gas shift reaction the optional use of a chemical and catalytical pre-treatment is also advantageously to convert the alcohols in the process condensate to organic acids which easily dissociate in the process condensate and could therefore treated with the electrodeionisation process. The use of all or at least one of the above described pre-treatment processes upstream the inventive electrodeionisation process is advantageously.

The clean process condensate obtained in the electrodeionisation process is used for clean steam outside the steam reforming or steam cracking process. The clean process condensate is fed to the steam drum where the heat of the steam reformation furnace is used for the generation of steam. Usually a certain amount of demineralised water is added to compensate losses due to the steam reformation or steam cracking reaction. The clean process condensate obtained from the inventive process contains no impurities and meets the requirements of clean steam. Therefore clean steam is produced in the steam drum and could be used outside the steam reformation or steam cracking process for instance in a condensation turbine. The produced clean steam could be also advantageously used in outside steam networks including co-generation units, steam turbines as back-pressure turbines or condensation turbines. Such process steam networks require in general a certain degree of steam quality to ensure reliability of a large steam system and avoid operational upsets.

According to another embodiment of the invention clean process condensate obtained in the electrodeionisation process is recycled as a part of the feed stream of the steam reforming or steam cracking process. Depending on the needs of the processes outside the steam reformation or steam cracking process a part of the clean process condensate could be used as steam for the steam reformation or steam crackling process. The amount of the recycled process condensate in this embodiment of the invention depends from the amount of clean steam needed outside the steam reformation or steam cracking process.

The present invention comprises a variety of advantages. The present invention provides the production of a very clean steam out of the process condensate from a steam reformation of steam cracking process. The investment cost for the apparatus needed for the production of clean steam from such a process condensate are drastically reduced compared to the prior art. The needed apparatus for an electrodeionisation process is much simpler and cheaper as a stripping column or a second steam drum with the respective feed cycle.

For further illustration of the invention one embodiment shown in the figures is described in more detail.
Figure 1 shows an embodiment of the invention for the cleaning of a process condensate from a steam reformation process.
Figure 2 shows an embodiment of the optional pre-treatment of the electrodeionisation process in detail

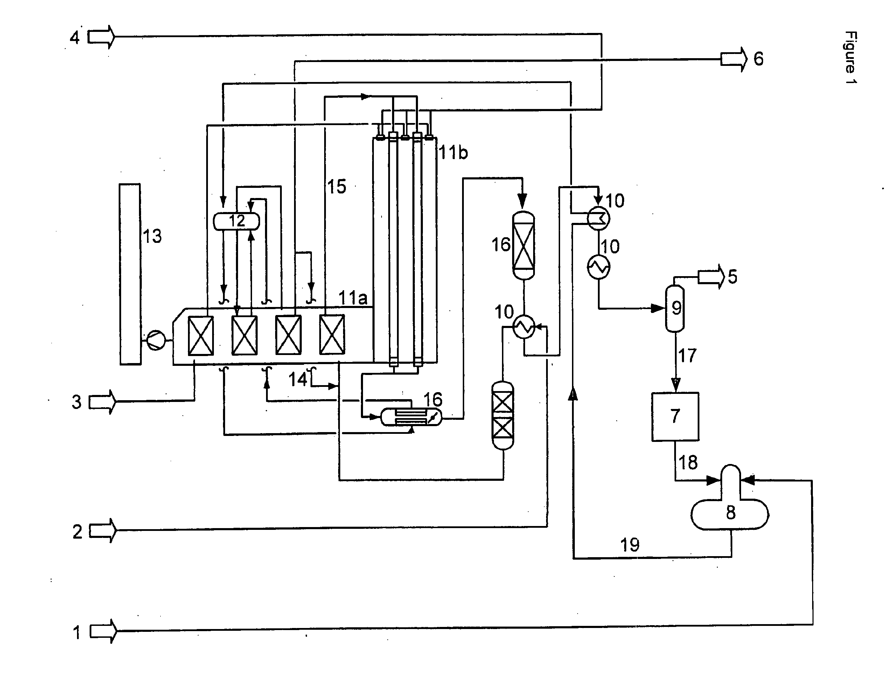

Figure 1 shows a process for cleaning a process condensate from a steam reforming process. The hydrocarbon containing feed 2 is passed through heat exchangers 10 into the preheating section 11 a of the steam reforming furnace 11. The hydrocarbon containing feed is mixed with process steam 14 in the preheating section 11 a of the steam reforming furnace. The steam feed mixture is passed through conduit 15 into the reforming section 11 b of the steam reforming furnace 11. The process gas is passed through some vessels 16 and a series of heat exchangers 10 into the separator 9. The process gas is continuously cooled by the heat exchangers 10 and thereby a two phase mixture is generated. The two phase mixture is separated in the separator 9 in a gaseous product which is passed to further treatment 5 and an aqueous phase 17 collected from the bottom of the separator 9. The aqueous phase 17 is the process condensate which is to be cleaned. The process condensate 17 is passed into an electrodeionisation process 7. As a product of the electrodeionisation process the clean process condensate 18 is derived. The clean process condensate 18 is fed together with a certain amount of demineralised water 1 to compensate the losses due to the steam reformation process to a deaerator 8. The deaerated clean water phase 19 from the deaerator 8 is passed via the heat exchanger 10 into the steam drum 12 which generates by heat exchange in the preheating section 11a of the steam reforming furnace 11 clean steam for export 6. The steam reforming furnace 11 is heated by the combustion of a hydrocarbon containing fuel 4 with air 3. The flue gas is passed via the stack 13 to the atmosphere.

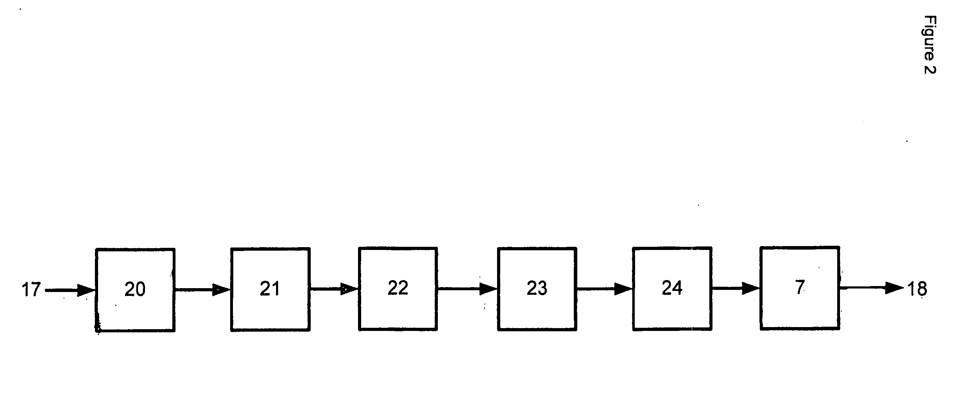

Figure 2 shows an embodiment of the electrodeionisation process 7 with all optional pre-treatment. The process condensate 17 is passed through a pre-filter 20, a heat exchanger 21, a mechanical cleaning 22, a chemical/catalytical treatment 23 and a reverse osmosis process 24 into the electrodeionisation 7. The pre-filter 20 is used to remove solid particles and larger impurities from the process condensate 17. The temperature of the process condensate 17 is adjusted to the optimal performing temperature of the electrodeionisation in the heat exchanger 21. Due to the mechanical cleaning 22 impurities as soot and dust are removed. In the chemical/catalytical pre-treatment 23 impurities as alcohols are converted to organic acids which dissociate and could be treated therefore by the following electrodeionisation process. The reverse osmosis process 24 produces a demineralised and desalted water phase. The process condensate 17 is finally cleaned to the requirements for clean steam by the electrodeionisation process 7 whereby the remaining impurities as dissociated organic acids or carbonate ions are removed. From the electrodeionisation process 7 the clean process condensate 18 is passed to the deaerator 8.

## Claims

1. Process for cleaning a process condensate (17) from a steam reforming process or steam cracking process, wherein said process condensate is feed to an electrodeionisation process (7), **characterized in that** said process condensate (17) is feed to a reverse osmosis process (24) prior the electrodeionisation process (7), and wherein clean process condensate (18) obtained in the electrodeionisation process (7) is used as clean steam (6) outside the steam reforming or steam cracking process, preferably in steam networks including co-generation units and steam turbines .

2. Process according to claim 1, **characterised in that** said process condensate (17) arises in a drying procedure of a process gas resulting from a steam reforming process, in a drying procedure of a process gas resulting from a steam reforming process followed by a water gas shift reaction process or in a drying procedure of a process gas resulting from a steam cracking process.

3. Process according to claim 1 or 2, **characterised in that** said process condensate (17) is feed to a pre-filter (20), a heat exchanger (21), a mechanical cleaning process (22) and/or a chemical and catalytic pre-treatment (23) prior the electrodeionisation process (7).

4. Process according to any of the claims 1 to 3, **characterised in that** clean process condensate (18) obtained in the electrodeionisation process (7) is recycled as a part of the process steam (14) of the steam reforming or steam cracking process.

## Patentansprüche

1. Verfahren zur Reinigung eines Prozesskondensats (17) aus einem Dampfreformierungsprozess oder Dampfcrackprozess, bei dem man das Prozesskondensat einem Elektrodeionisationsprozess (7) zuführt, **dadurch gekennzeichnet, dass** man das Prozesskondensat (17) vor dem Elektrodeionisationsprozess (7) einem Umkehrosmoseprozess (24) zuführt, und wobei bei dem Elektrodeionisationsprozess (7) erhaltenes reines Prozesskondensat (18) als Reindampf (6) außerhalb des Dampfreformierungsprozesses oder Dampfcrackprozesses verwendet wird, vorzugsweise in Dampfnetzen mit Blockheizkraftwerken und Dampfturbinen.

2. Verfahren nach Anspruch 1, **dadurch gekennzeichnet, dass** das Prozesskondensat (17) bei der Trocknung eines Prozessgases aus einem Dampfreformierungsprozess, bei der Trocknung eines Prozessgases aus einem Dampfreformierungsprozess mit nachgeschaltetem Konvertierungsreaktionsprozess oder bei der Trocknung eines Prozessgases aus einem Dampfcrackprozess anfällt.

3. Verfahren nach Anspruch 1 oder 2, **dadurch gekennzeichnet, dass** man das Prozesskondensat (17) vor dem Elektrodeionisationsprozess (7) einem Vorfilter (20), einem Wärmetauscher (21), einem mechanischen Reinigungsprozess (22) und/oder einer chemischen und katalytischen Vorbehandlung (23) zuführt.

4. Verfahren nach einem der Ansprüche 1 bis 3, **dadurch gekennzeichnet, dass** man bei dem Elektrodeionisationsprozess (7) erhaltenes reines Prozesskondensat (18) als Teil des Prozessdampfs (14) des Dampfreformierungs- oder Dampfcrackprozesses rezykliert.

## Revendications

1. Procédé de nettoyage d'un condensat de traitement (17) provenant d'un procédé de vaporeformage ou d'un procédé de vapocraquage, dans lequel ledit condensat de traitement est soumis à un procédé d'électrodéionisation (7), **caractérisé en ce que** ledit condensat de traitement (17) est soumis à un procédé d'osmose inverse (24) avant le procédé d'électrodéionisation (7), et dans lequel le condensat de traitement propre (18) obtenu dans le procédé d'électrodéionisation (7) est utilisé comme vapeur propre (6) à l'extérieur du procédé de vaporeformage ou de vapocraquage, de préférence dans des réseaux de vapeur, y compris des unités de cogénération et des turbines à vapeur.

2. Procédé selon la revendication 1, **caractérisé en ce que** ledit condensat de traitement (17) apparaît dans une procédure de séchage d'un gaz de traitement résultant d'un procédé de vaporeformage, dans une procédure de séchage d'un gaz de traitement résultant d'un procédé de vaporeformage suivi d'un procédé au gaz à l'eau ou dans une procédure de séchage d'un gaz de traitement résultant d'un procédé de vapocraquage.

3. Procédé selon la revendication 1 ou 2, **caractérisé en ce que** ledit condensat de traitement (17) est acheminé jusqu'à un préfiltre (20), un échangeur de chaleur (21), un procédé de nettoyage mécanique (22) et/ou un prétraitement chimique et catalytique (23) avant le procédé d'électrodéionisation (7).

4. Procédé selon l'une quelconque des revendications 1 à 3, **caractérisé en ce que** le condensat de traitement propre (18) obtenu dans le procédé d'électrodéionisation (7) est recyclé comme une partie de la vapeur de traitement (14) du procédé de vaporeformage ou de vapocraquage.
